# EUROPEAN PATENT APPLICATION

(11) **EP 1 780 634 A2**
(43) Date of publication of application: **02.05.2007**
(21) Application number: 06290447.9
(22) Date of filing: 20.03.2006
(51) Int. Cl.: G06F 3/048

(54) **Tabbed scrolling**

(30) Priority: 26.10.2005 EP 05292258
(71) Applicant: Alcatel Lucent, 75008 Paris (FR)
(72) Inventor: Strauss, Thomas, 73734 Esslingen (DE); Wahl, Stefan, 71701 Schwieberdingen (DE); Laible, Volker, 70469 Stuttgart (DE)
(74) Representative: Brose, Gerhard

(57) **Abstract**

A method to navigate through content (3, 31, 32, 33) displayable in a window (1, 11, 12, 13) and the like displayed on a screen by using at least one scroll bar (4, 41, 42, 43, 44, 45, 46) that is movable arranged in a scroll track (5, 51, 52, 53, 54, 55, 56) at a side (6, 61, 62, 63) of said window (1, 11, 12, 13), is described, wherein by moving said scroll bar (4, 41, 42, 43, 44, 45, 46) along said scroll track (5, 51, 52, 53, 54, 55, 56) said content (3, 31, 32, 33) displayed in said window (1, 11, 12, 13) changes, wherein the scroll track (5, 51, 52, 53, 54, 55, 56) is divided into distinguishable sections (9, 91, 92, 93, 93', 93", 93"', 94, 95, 96, 97). Furthermore a computer program product for causing a computer to perform said method, plus a terminal and a server to be used to execute said method are described.

## Description

### Technical field:

The invention relates to a method to navigate through content displayable in a window and the like by using scroll bars, plus a computer program product for causing a computer to perform said method, plus a terminal and a server to be used to execute said method.

### Background of the invention:

Today, in many applications, such as e.g. file- or internet-browsers, word processing, image editing, data-base-viewers and the like, scroll bars are used if the content to be displayed is larger then the size of a window displayed on a screen.

In cases where the content to be displayed is by far larger than the actual window size, scrolling will become inconvenient and it will be difficult to get to the desired position. For example when browsing a directory with hundreds of folders and directories, the scroll bar is very small and very unhandy.

In such cases also retrieval of content once found is very inconvenient, since the only clues the user can use to retrieve the content desired is the content itself.

### Technical purpose of the invention:

The technical purpose of the invention is to develop a method that improves navigation and retrieval of content displayable in a window by using a scroll bar that is movable along a scroll track, plus a computer program product for causing a computer to perform said method, plus a terminal and a server to be used to execute said method.

Disclosure of the invention and its advantages:
The invention's technical purpose is met by said method of said specifying features of claim 1, that is characterized in that the scroll track is divided into distinguishable sections to improve navigation through and retrieval of content displayable in said window by moving said scroll bar into said sections, e.g. by using a mouse, a scroll ball, a keyboard and the like. The window can be any window to be used to display information on a screen, e.g. on a computer screen, like a browser window, a window showing the content of a hard disk, a window of an application like e.g. an office or an image editing application and the like. If the content to be displayed is very huge or has to be displayed on a very small screen, the whole screen can be the window. The term screen comprises all kind of means that can be used to computer like display information, e.g. a CRT monitor, a TFT monitor, a beamer, a display of a machine or a display within a car and the like.

Said method with the specifying features of claim 1 has the advantage over the state of the art, that particularly navigation through content that is too huge to be displayed within a window on a computer screen so that the content has to be scrolled within said window by moving a scroll bar along a scroll track is improved. By dividing the scroll track into distinguishable sections navigation and retrieval of content is improved because a user gets visible clues particularly to be used when retrieving content. Thereby the core idea of the invention is to tab the scrolling by dividing the scroll track into distinguishable sections. The retrieval of content once found is easier by tabbed scrolling. Furthermore if the sections are labeled or colored, particularly if the labeling or coloring is content related, also navigation through content that can only be partly displayed in a window is improved, since it is possible to immediately skip to the content desired and actually not displayed in said window. Tabbed scrolling enhances regular scroll bars by dividing the scroll-track into sections and marking these sections with colourcodes and/or labels. Tabbed scrolling eases scrolling through large lists, documents and the like and helps to get to the desired content faster than with regular scroll bars, especially for smaller terminals, particularly mobile end devices, like e.g. mobile phones, PDAs, handhelds, organizers and the like usually comprising small screens.

In a preferred embodiment of said method according to the invention, at least some sections are divided into sub-sections, wherein said sub-sections get visible when the scroll bar is moved into a section that is divided into sub-sections. Such an embodiment is advantageous particularly if sections the scroll bar is not located in are compressed wherein the section the scroll bar is actually located in is enlarged simultaneously.

In another preferred embodiment of said method according to the invention, a section the scroll bar is moved in is enlarged to improve fine-navigation within the section selected, wherein other sections are compressed simultaneously. Selection of a section takes place by moving the scroll bar into a section.

In a particularly preferred embodiment of said method according to the invention, sections are compressed the more the farer the scroll bar is moved away from them and are compressed the less the closer the scroll bar gets.

In a preferred embodiment of said method according to the invention, adjacent compressed sections are aggregated to one or few sections until the scroll bar gets close to or moves into such an aggregated section. When the scroll bar is moved into such an aggregated section, the section is divided again into its originate sections. Thereby it is also thinkable that division into originate sections already takes place when the scroll bar gets close to an aggregated section.

In another preferred embodiment of said method according to the invention, aggregation of sections increases the more sections to be aggregated get compressed.

In a particularly preferred embodiment of said method according to the invention, compression and/or aggregation of sections only takes place for sections whose content is actually not displayed in the window. If sections would be compressed whose content is actually displayed in the window, the problem occurs that the content also has to be compressed. This requires laborious and complex intelligence for controlling the context. This problem can be avoided by only compressing sections whose content cannot be seen on the screen actually.

In a preferred embodiment of said method according to the invention, adjacent sections differ in colour. Thereby at least adjacent sections are distinguishable by different colours. Thereby it is thinkable that the colouring of the sections is content related. E.g. by settings of the user, sections providing different content, like e.g. popular news, political news, stock exchange news, entertainment, hobby, leisure and the like have different colours.

In an additional preferred embodiment of said method according to the invention, the sections are labelled. Thereby preferably adjacent sections are distinguishable by different labelling. Thereby it is thinkable that the labelling of the sections is content related. Thereby adjacent sections typically comprise different content, wherein the boarder between two adjacent sections is characterized by a change in content. This change in content can be e.g. different initials in an alphabetic list, different topics, different numbering, different headlines and the like. The undisplayed content has first to be analysed before the sections of a scroll track are labelled.

In a particularly preferred embodiment of the invention, the sections provide an association with the content. This association with the content can be e.g. a sound played or a voice telling the user what content he will see when moving the scroll bar into that specific section. Playing a sound can be useful e.g. for blind or visually handicapped people. It is also thinkable that the association comprises logos, graphics and the like. It is also thinkable that the association comprises text shortly describing the content of a section. The association with the content can occur e.g. when moving the scroll bar in a section of the scroll track, or it can occur when moving e.g. the mouse cursor onto a section of the scroll track, so that the association occurs in an own small window beside the scroll track, e.g. similar to a tool tip known from applications, wherein in a small window the function of a button or a tool is explained by text. It is important to mention that the association can comprise any means appropriate to be clearly recognized and distinguished by a user. Furthermore the association can comprise any means appropriate to provide content related information.

In another preferred embodiment of said method according to the invention, scroll bars, each one being movable arranged along a scroll track that is divided into sections, are arranged at the upper and/or lower and/or left and/or right side of the window. If a window is divided into two parts, it is also thinkable that one or more scroll bars and their appropriate scroll tracks are arranged in the bridge that divides the window.

In another particularly preferred embodiment of said method according to the invention, the content displayed in the window is divided into at least two parts, wherein each part is scrollable by at least one scroll bar that is movable arranged in a scroll track at the side of the window or at the side of a part of the window. Thereby each of said scroll bars is used for scrolling through one part of said content displayed in the window.

In another preferred embodiment of the invention, said method is performed by a computer program product stored on a computer usable medium comprising computer readable program means for causing a computer to perform the method mentioned above, when said computer program product is executed on a computer.

A preferred embodiment of the invention comprises a terminal to be used to execute said method mentioned above, wherein said terminal comprises a screen to be used to display information, means to display content within a window on said screen, means to display at least one scroll bar that is movable arranged within a scroll track at the side of said window, means to change the content displayed within said window when moving said scroll bar along the scroll track, so that said scroll bar can be used to navigate through said content, and means to divide said scroll track into distinguishable sections. Said terminal can be e.g. a personal computer, a laptop, a mobile device like e.g. a mobile phone, a PDA, a handheld and the like.

A preferred embodiment of said terminal according to the invention comprises means to enlarge the section the scroll bar is actually located in and means to compress at least another section simultaneously whose content is actually not displayed within said window.

Another preferred embodiment of said terminal according to the invention comprises means to preferably content related colour at least adjacent sections different.

An additional preferred embodiment of said terminal according to the invention comprises means to preferably content related label the sections different.

A preferred embodiment of the invention comprises a server to be used to execute said method mentioned above, wherein said server comprises means to be connected with a screen, e.g. with a terminal like mentioned above that comprises a screen and can be remotely attached to said server, means to display content within a window on said screen, means to display at least one scroll bar that is movable arranged within a scroll track at the side of said window, means to change the content displayed within said window when moving said scroll bar, so that said scroll bar can be used to navigate through said content, and means to divide said scroll track into distinguishable sections.

A preferred embodiment of said server according to the invention comprises means to enlarge the section the scroll bar is actually located in and means to compress at least another section simultaneously whose content is actually not displayed within said window.

Another preferred embodiment of said server according to the invention comprises means to colour at least adjacent sections different, wherein the colouring preferably is content related.

An additional preferred embodiment of said server according to the invention comprises means to preferably content related label the sections different.

Brief description of the drawing, with
- Fig. 1: showing a window displaying a content comprising storage and folders of a computer system, wherein the window is divided into two parts and at the right and the lower side of each part a scroll bar is movable arranged within a scroll track that is divided into distinguishable sections according to the invention,
- Fig. 2: showing a browser window displaying the content of an information portal, wherein the sections of the scroll track on the right side of the window are colored and labeled content related, and
- Fig. 3: showing a window similar to the window of Fig. 1, wherein the particular section of the scroll track the scroll bar is moved in is enlarged, wherein other sections are compressed simultaneously.

### Paths for performing the invention:

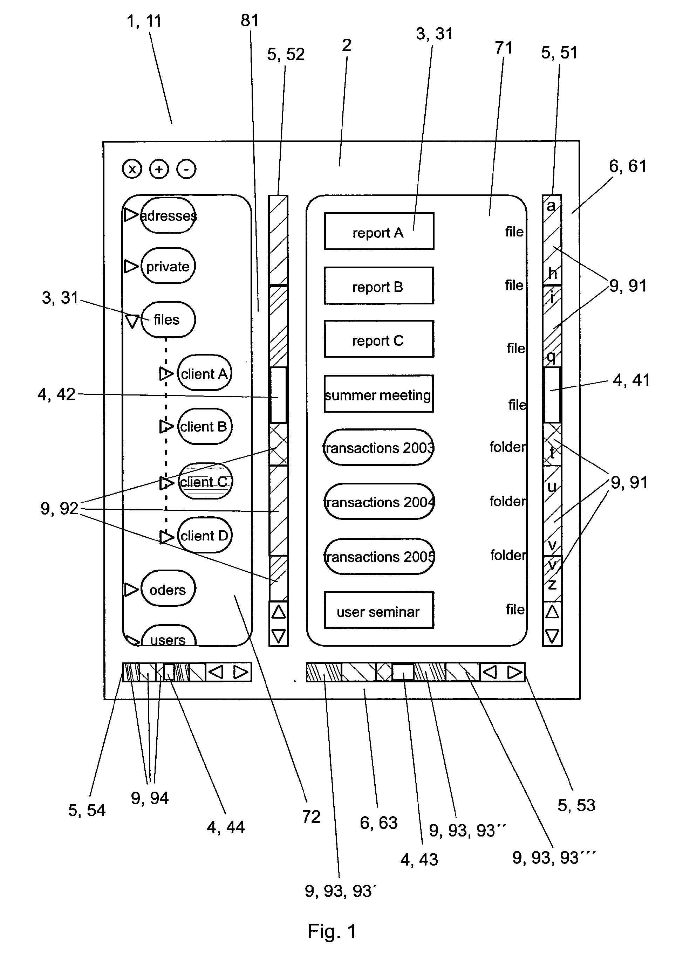

A window 1 as shown in Fig. 1, 2 and 3 comprises a frame 2 surrounding the content 3 displayed in said window 1. At the side 6 of the window 1, in the frame 2 a scroll bar 4 is movable arranged within a scroll track 5. The scroll track 5 is divided into distinguishable sections 9. To distinguish the sections 9 they are labeled and/or colored. Thereby the labelling of the sections 9 can be content related. Hence sections 9 can be labeled with short descriptions or abbreviations of the non-displayed content. For example in an alphabetical list the initials of each section of the list can be used for labelling the sections 9. Or when viewing a webpage the labels could give a hint of the content for each section 9. By clicking on one of these sections 9 or by moving the scroll bar 4 into one of these sections 9, the related content 3 will the be displayed in the window 1.

In Fig. 1 the window 11 is divided by a bridge 81 into two parts 71, 72. The content 31 displayed in both parts 71, 72 of the window 11 comprises an alphabetic list of storages, files and folders accessible to a personal computer. The sections 91 of the scroll track 51 at the right side 61 of the right part 71 of the window 11 are colored and are content related labeled with initials of the alphabetic list. The sections 92 of the scroll track 52 that is arranged on the bridge 81 that is dividing the window 11 into the two parts 71, 72 are colored with different colors to enhance retrieval of content. The scroll tracks 53, 54 at the lower side 63 of the window are also divided into sections 93, 94 that are distinguishable by different colors. Thereby the colors of the sections 93 are user specific. Scroll bars 41, 42, 43, 44 are movable arranged in the scroll tracks 51, 52, 53, 54. By moving the scroll bar 43 into the first section 93' of the scroll track 53 the names of the storages, folders and files are displayed in the right part 71 of the window 11. By moving the scroll bar 43 into the middle section 93" of the scroll track 53 the dates the storages, folders and files are changed are displayed in the right part 71 of the window 11. By moving the scroll bar 43 into the last section 93"' of the scroll track 53 the attributes of the storages, folders and files are displayed in the right part 71 of the window 11. Coloring and labeling allows distinguishing the different sections 91, 92, 93 and 94. By content relating labeling the sections 91 of the right scroll track 51 navigation and retrieval of content 31 displayed in the window 11 is enhanced.

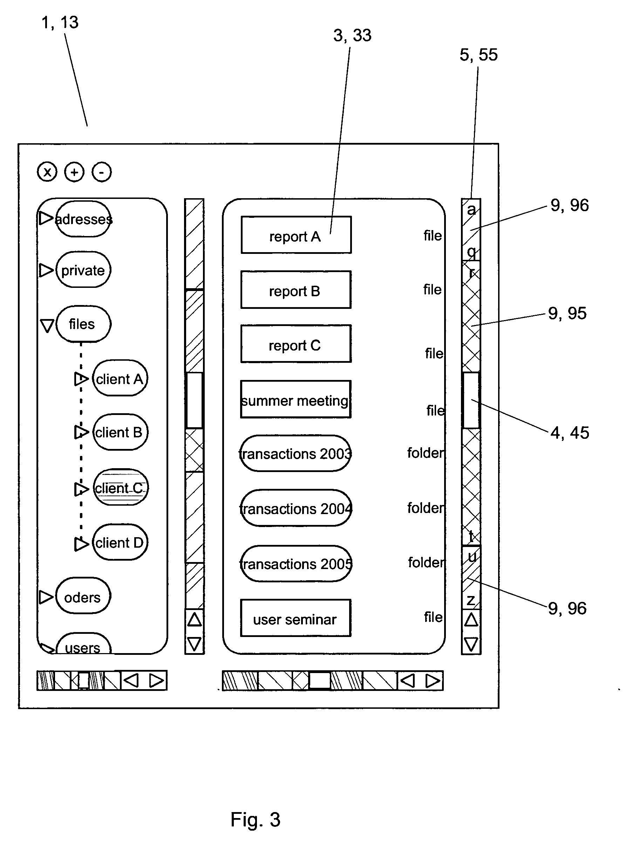

Almost the same window 13 with the same content 33 as shown in Fig. 1 is shown in Fig. 3, wherein a section 95 of the scroll track 55 the scroll bar 45 is located in is enlarged and other sections 96 of the scroll track 55 are compressed simultaneously. Thereby by moving the scroll bar 45 into the section 95 that is labelled with 'o-r', this section 95 is enlarged wherein the remaining sections 96 are compressed (compare the labelling of the sections 91 in Fig. 1 with the labelling of section 95 in Fig. 3). A section 95 can be divided into several sub-sections 'o', 'p-q', 'r', that get visible after moving the scroll bar 45 into that section 95. The section 95 then will be enlarged, so that the sub-sections 'o', 'p-q', 'r' are displayed. Other sections 96 are summarized to aggregated sections (compare the labelling of the sections 91 in Fig. 1 with the labelling of the sections 95, 96 of Fig. 3).

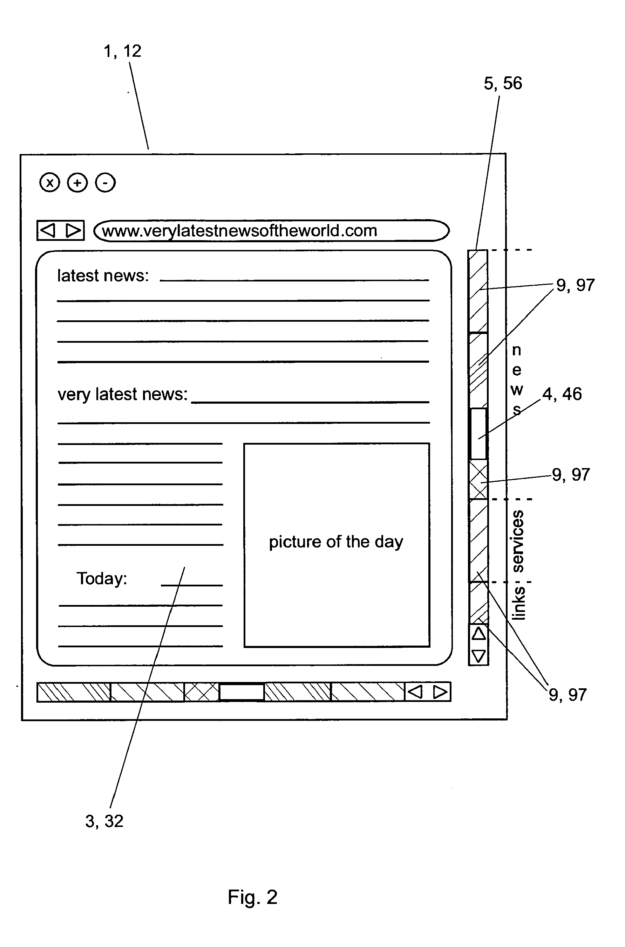

Another situation is shown in Fig. 2 wherein the content 32 of an information portal is shown in a browser window 12. Thereby the scroll track 56 at the right side of the window 12 is divided into sections 97 that are content related labeled by different topics. By moving the scroll bar 46 into a section 97 labeled with 'links' the content 32 displayed in the window 12 changes and links concerning news displayed in a section 97 labeled with 'news' are displayed. Thereby the content 32 has first to be analyzed before the sections 97 of the scroll track 56 are labelled. Thereby analyzing of the content and content related labelling of the sections 97, i.e. providing data that can be used for labelling the sections 97, can be a service provided by a server, e.g. by a server of a service provider. It is also thinkable that content related labelling takes place at the user side e.g. within a terminal such as a home computer, a mobile end device like a laptop and the like, a mobile phone, a handheld, a PDA and the like. Thereby the content actually provided is analyzed on site, and, depending on the user settings, labelling or colouring is carried out.

It is important to mention that by dividing the scroll track into distinguishable sections navigation and retrieval of content displayed in a window is enhanced particularly in combination with mobile terminals such as mobile phones, PDAs and the like, that usually provide only small screens.

### Commercial applicability:

The invention is commercially applicable particularly in the field of providing content and information to be displayed on computer like devices plus in the filed of production and operation of terminals like e.g. mobile devices to be used to display content, plus in the field of production and operation of servers providing such content to remotely attached terminals.

### List of reference numerals

- 1, 11, 12, 13: window
- 2: frame
- 3,31,32,33: content
- 4, 41, 42, 43, 44, 45, 46: scroll bar
- 5, 51, 52, 53, 54, 55, 56: scroll track
- 6, 61, 62, 63: side
- 71,72: part
- 81: bridge
- 9, 91, 92, 93, 93', 93", 93"', 94, 95, 96, 97: section

## Claims

1. Method to navigate through content (3, 31, 32, 33) displayable in a window (1, 11, 12, 13) and the like displayed on a screen by using at least one scroll bar (4, 41, 42, 43, 44, 45, 46) that is movable arranged in a scroll track (5, 51, 52, 53, 54, 55, 56) at a side (6, 61, 62, 63) of said window (1, 11, 12, 13), wherein by moving said scroll bar (4, 41, 42, 43, 44, 45, 46) along said scroll track (5, 51, 52, 53, 54, 55, 56) said content (3, 31, 32, 33) displayed in said window (1, 11, 12, 13) changes, **characterized in that**
the scroll track (5, 51, 52, 53, 54, 55, 56) is divided into distinguishable sections (9, 91, 92, 93, 93', 93", 93"', 94, 95, 96, 97).

2. Method according to claim 1 **characterized in that**
at least some sections (95) are divided into sub-sections ('o', 'p-q', 'r'), wherein said sub-sections ('o', 'p-q', 'r') get visible when the scroll bar (45) is moved into a section (95) that is divided into sub-sections ('o', 'p-q', 'r').

3. Method according to claim 1 or 2, **characterized in that**
a section (95) the scroll bar (45) is moved in is enlarged, wherein other sections (96) are compressed simultaneously.

4. Method according to claim 3, **characterized in that**
sections (96) are compressed the more the further the scroll bar (45) is moved away from them and are compressed the less the closer the scroll bar (45) gets.

5. Method according to claim 3 or 4, **characterized in that**
adjacent compressed sections (96) are aggregated to one or few sections until the scroll bar gets close to or moves into such an aggregated section.

6. Method according to claim 5, **characterized in that**
aggregation of sections increases the more sections to be aggregated get compressed.

7. Method according to one of the claims 3 to 6, **characterized in that**
compression and/or aggregation of sections only takes place for sections whose content is actually not displayed in the window.

8. Method according to one of the previous claims, **characterized in that**
scroll bars (4, 41, 42, 43, 44, 45, 46) each one being movable arranged along a scroll track (5, 51, 52, 53, 54, 55, 56) divided into sections (9, 91, 92, 93, 93', 93", 93"', 94, 95, 96, 97) are arranged at the upper and/or lower and/or left and/or right side (6, 61, 62, 63) of the window (1, 11, 12, 13).

9. Method according to one of the previous claims, **characterized in that**
the content (31, 33) displayed in the window (11, 13) is divided into at least two parts (71, 72), wherein each part (71, 72) is scrollable by at least one scroll bar (41, 42, 43, 44, 45) that is movable arranged in a scroll track (51, 52, 53, 54, 55) at the side (61, 62, 63) of the window (11, 13).

10. A computer program product stored on a computer usable medium comprising computer readable program means for causing a computer to perform the method of anyone of the claims 1 to 9, when said computer program product is executed on a computer.

11. Terminal to be used to execute the method according to one of the claims 1 to 9, comprising a screen to be used to display information, means to display content (3, 31, 32, 33) within a window (1, 11, 12, 13) on said screen, means to display at least one scroll bar (4, 41, 42, 43, 44, 45, 46) movable arranged within a scroll track (5, 51, 52, 53, 54, 55, 56) at the side (6, 61, 62, 63) of said window (1, 11, 12, 13), means to change the content (3, 31, 32, 33) displayed within said window (1, 11, 12, 13) when moving said scroll bar (4, 41, 42, 43, 44, 45, 46), and means to divide said scroll track (5, 51, 52, 53, 54, 55, 56) into distinguishable sections (9, 91, 92, 93, 93', 93", 93"', 94, 95, 96, 97).

12. Terminal according to claim 11, **characterized by**
means to enlarge the section (95) the scroll bar (45) is actually located in and means to compress at least another section (96) simultaneously whose content is actually not displayed within said window (13).

13. Server to be used to execute the method according to one of the claims 1 to 9,
**characterized by**
means to be connected with a screen, means to display content (3, 31, 32, 33) within a window (1, 11, 12, 13) on said screen, means to display at least one scroll bar (4, 41, 42, 43, 44, 45, 46) movable arranged within a scroll track (5, 51, 52, 53, 54, 55, 56) at the side (6, 61, 62, 63) of said window (1, 11, 12, 13), means to change the content (3, 31, 32, 33) displayed within said window (1, 11, 12, 13) when moving said scroll bar (4, 41, 42, 43, 44, 45, 46), and means to divide said scroll track (5, 51, 52, 53, 54, 55, 56) into distinguishable sections (9, 91, 92, 93, 93', 93", 93"', 94, 95, 96, 97).

14. Server according to claim 13, **characterized by**
means to enlarge the section (95) the scroll bar (45) is actually located in and means to compress at least another section (96) simultaneously whose content is actually not displayed within said window (13).
